# EUROPEAN PATENT APPLICATION

(11) **EP 2 922 338 A1**
(43) Date of publication of application: **23.09.2015**
(21) Application number: 12888522.5
(22) Date of filing: 28.12.2012
(51) Int. Cl.: H04W 28/10, H04W 88/18

(54) **METHOD AND APPARATUS FOR PROVIDING CONTENT ACCORDING TO TYPE OF COMMUNICATION NETWORK**

(30) Priority: 15.11.2012 KR 20120129298
(71) Applicant: Cdnetworks Co., Ltd., Seoul 135-935 (KR)
(72) Inventor: CHOI, Jun-Ho, Seoul (KR); AHN, Sang-Joon, Seoul (KR)
(74) Representative: Rees, Simon John Lewis
(86) International application number: PCT/KR2012/011799
(87) International publication number: WO 2014/077457

(57) **Abstract**

A method and apparatus for providing content, which are capable of distinguishing between a mobile communication network and an Internet communication network, is disclosed.

A method comprise extracting an Internet protocol (IP) address included in a received content transmission request; determining whether or not the extracted IP address is a private IP address; determining the content transmission request to be a content transmission request over a mobile communication network if it is determined that the extracted IP address is a private IP address; and transmitting requested content to the extracted IP address; wherein the content server is set such that it also responds to a content transmission request from a private IP address, and the mobile communication network performs the content transmission request on the content server without the intervention of a network address translation (NAT) device.

## Description

### BACKGROUND OF THE INVENTION

### 1. Field of the Invention

The present invention relates generally to a method and apparatus for providing content and, more particularly, to a method and apparatus for determining the type of communication network and then providing content in accordance with the type of communication network.

### 2. Description of the Related Art

With the popularization of various types of handheld terminals, such as smart phones, tablet computers, touch pads, and laptop computers, thanks to the development of mobile communication technology, not only Internet access over a mobile communication network but also Internet access over conventional wired/wireless Internet communication networks has considerably increased.

For ease of description, a communication network over which the Internet is accessed without the intervention of a mobile communication network is hereinafter referred to as an "Internet communication network."

Meanwhile, a mobile communication network has a relatively lower data transfer rate than the Internet communication network because of the characteristics of the network, and may generate the difference in a screen on which data is displayed or the difference in the data processing time because of the characteristics of devices, such as smart phones and touch pads, that is, a plurality of devices using the mobile communication network.

Accordingly, there is a need to distinguish between Internet access over a mobile communication network and access over an Internet communication network even in the case of the same content and then apply different technology for sending content in a different format or more rapidly sending data based on the type of communication network.

Although a content server has been mentioned in the above description, any server for transmitting and receiving data so that the data is displayed on a user-side terminal may be referred to as a "content server." A content server may also be referred to as another name, such as a web server or a data server, but such a server herein is referred to as a content server for ease of description.

In line with such a necessity, recently, content itself is separately fabricated as content for mobile communication, or a separate content server for a mobile communication network is managed.

In order to manage a separate content server, however, problems arise in that additional cost and management are required from the view of point of a content provider and a lot of cost and time are required for the synchronization of content so that the same content is provided by a content server for a mobile communication network and a content server for an Internet communication network.

Furthermore, if a single content server is managed without the management of an additional content server, problems arise in that a mobile communication network has a relatively lower data transfer rate than the Internet communication network because of the characteristics of the network and the difference in the screen on which data is displayed and the difference in the data processing time may occur due to the characteristics of a plurality of devices using a mobile communication network, such as smart phones and touch pads.

Accordingly, it is necessary to determine the type of communication network accessed by a client that requests content while providing content over both a mobile communication network and an Internet communication network.

### SUMMARY OF THE INVENTION

Accordingly, the present invention has been made keeping in mind the above problems occurring in the conventional art, and an object of the present invention is to provide a method and apparatus for providing content, which are capable of distinguishing between a mobile communication network and an Internet communication network and also providing content over both networks while managing a single content server.

Another object of the present invention is to provide a method and apparatus for providing content, which are capable of distinguishing between a mobile communication network and an Internet communication network, thereby more rapidly providing content and also providing content in different formats based on the type of communication network.

Other objects of the present invention will be readily apparent from descriptions of the following embodiments.

In order to achieve the above object, in accordance with an aspect of the present invention, there is provided a method of providing content.

In accordance with an embodiment of the present invention, there is provided a method of providing content, the method being performed by a content server connected to a mobile communication network and an Internet communication network and configured to provide content, the method including extracting an Internet protocol (IP) address included in a received content transmission request; determining whether or not the extracted IP address is a private IP address; determining the content transmission request to be a content transmission request over a mobile communication network if it is determined that the extracted IP address is a private IP address; and transmitting requested content to the extracted IP address; wherein the content server is set such that it also responds to a content transmission request from a private IP address, and the mobile communication network performs the content transmission request on the content server without the intervention of a network address translation (NAT) device.

Determining the content transmission request to be a content transmission request over a mobile communication network if it is determined that the extracted IP address is a private IP address may include determining the content transmission request to be a content transmission request over an Internet communication network if it is determined that the extracted IP address is a public IP address, not a private IP address.

If it is determined that the extracted IP address is a private IP address, whether or not the IP address is included in previously stored IP address information may be determined, and the requested content may be transmitted to the extracted IP address if it is determined that the IP address is included in the previously stored IP address information.

Furthermore, if it is determined that the extracted IP address is a private IP address, whether or not the IP address is included in previously stored IP address information may be determined, and a response to the received content transmission request may not be made if it is determined that the IP address is not included in the previously stored IP address information.

Transmitting the requested content to the extracted IP address may include, if it is determined that the extracted IP address is a private IP address, selecting data transfer acceleration technology to which a data transfer acceleration algorithm suitable for a mobile communication network has been applied, and transmitting the requested content using the selected data transfer acceleration technology.

Furthermore, the data transfer acceleration algorithm suitable for the mobile communication network may be a delay-based transfer control protocol (TCP) congestion control algorithm.

Transmitting the requested content to the extracted IP address may include, if it is determined that the extracted IP address is a private IP address, selecting data transfer acceleration technology to which a data transfer acceleration algorithm suitable for an Internet communication network has been applied, and transmitting the requested content using the selected data transfer technology.

Furthermore, the data transfer acceleration algorithm suitable for the Internet communication network may be a loss-based TCP congestion control algorithm.

Transmitting the requested content to the extracted IP address may include, if it is determined that the extracted IP address is a private IP address, selecting content in a quarter video graphic array (QVGA) format, and transmitting the selected content in the format.

Transmitting the requested content to the extracted IP address may include, if it is determined that the extracted IP address is a private IP address, selecting content in one of high definition (HD) and standard definition (SD) formats, and transmitting the selected content in the format.

In accordance with another aspect of the present invention, there is provided an apparatus for providing content.

In accordance with an embodiment of the present invention, there is provided an apparatus for providing content, the apparatus being connected to a mobile communication network and an Internet communication network and configured to provide content, the apparatus including a communication network type determination unit configured to extract an IP address included in a received content transmission request, to determine whether or not the extracted IP address is a private IP address, and to determine the content transmission request to be a content transmission request over a mobile communication network if it is determined that the extracted IP address is a private IP address; and a communication unit configured to transmit the content transmission request and requested content to the extracted IP address, and to also respond to a content transmission request from a private IP address; wherein the mobile communication network performs the content transmission request on the content server without the intervention of an NAT device.

The communication network type determination unit may determine the content transmission request to be the content transmission request over an Internet communication network if it is determined that the extracted IP address is a public IP address, not a private IP address.

The content provision apparatus may further include an IP address storage unit configured to store IP addresses. The communication network type determination unit may determine whether or not the extracted IP address is included in IP address information stored in the IP address storage unit if it is determined that the extracted IP address is a private IP address, and the communication unit may transmit the requested content to the extracted IP address if it is determined that the IP address is included in previously stored IP address information.

Furthermore, the communication unit may not make a response to the received content transmission request if, as a result of the determination of the communication network type determination unit, it is determined that the extracted IP address is not included in the previously stored IP address information.

The transmission of the requested content to the extracted IP address that is performed by the communication unit may include, if it is determined that the extracted IP address is a private IP address, the selection of data transfer acceleration technology to which a data transfer acceleration algorithm suitable for a mobile communication network has been applied, and the transmission of the requested content using the selected data transfer acceleration technology.

Furthermore, the data transfer acceleration algorithm suitable for the mobile communication network may be a delay-based transfer control protocol (TCP) congestion control algorithm.

The transmission of the requested content to the extracted IP address that is performed by the communication unit may include, if it is determined that the extracted IP address is a private IP address, the selection of data transfer acceleration technology to which a data transfer acceleration algorithm suitable for an Internet communication network has been applied, and the transmission of the requested content using the selected data transfer technology.

Furthermore, the data transfer acceleration algorithm suitable for the Internet communication network may be a loss-based TCP congestion control algorithm.

The transmission of the requested content to the extracted IP address that is performed by the communication unit may include, if it is determined that the extracted IP address is a private IP address, the selection of content in a QVGA format, and the transmission of the selected content in the format.

The transmission of the requested content to the extracted IP address that is performed by the communication unit may include, if it is determined that the extracted IP address is a private IP address, the selection of content in one of HD and SD formats, and the transmission of the selected content in the format.

In accordance with still another aspect of the present invention, the present invention provides a recording medium having a program for implementing a method of providing content recorded thereon.

In accordance with an embodiment of the present invention, there is provided a recording medium having a program for implementing a method of providing content recorded on, the method being performed by a content server connected to a mobile communication network and an Internet communication network and configured to provide content, the method including extracting an IP address included in a received content transmission request; determining whether or not the extracted IP address is a private IP address; determining the content transmission request to be a content transmission request over a mobile communication network if it is determined that the extracted IP address is a private IP address; and transmitting requested content to the extracted IP address; wherein the content server is set such that it also responds to a content transmission request from a private IP address, and the mobile communication network performs the content transmission request on the content server without the intervention of an NAT device.

Determining the content transmission request to be a content transmission request over a mobile communication network if it is determined that the extracted IP address is a private IP address may include determining the content transmission request to be a content transmission request over an Internet communication network if it is determined that the extracted IP address is a public IP address, not a private IP address.

If it is determined that the extracted IP address is a private IP address, whether or not the IP address is included in previously stored IP address information may be determined, and the requested content may be transmitted to the extracted IP address if it is determined that the IP address is included in the previously stored IP address information.

Furthermore, if it is determined that the extracted IP address is a private IP address, whether or not the IP address is included in previously stored IP address information may be determined, and a response to the received content transmission request may not be made if it is determined that the IP address is not included in the previously stored IP address information.

Transmitting the requested content to the extracted IP address may include, if it is determined that the extracted IP address is a private IP address, selecting data transfer acceleration technology to which a data transfer acceleration algorithm suitable for a mobile communication network has been applied, and transmitting the requested content using the selected data transfer acceleration technology.

Furthermore, the data transfer acceleration algorithm suitable for the mobile communication network may be a delay-based transfer control protocol (TCP) congestion control algorithm.

Transmitting the requested content to the extracted IP address may include, if it is determined that the extracted IP address is a private IP address, selecting data transfer acceleration technology to which a data transfer acceleration algorithm suitable for an Internet communication network has been applied, and transmitting the requested content using the selected data transfer technology.

Furthermore, the data transfer acceleration algorithm suitable for the Internet communication network may be a loss-based TCP congestion control algorithm.

Transmitting the requested content to the extracted IP address may include, if it is determined that the extracted IP address is a private IP address, selecting content in a quarter video graphic array (QVGA) format, and transmitting the selected content in the format.

Transmitting the requested content to the extracted IP address may include, if it is determined that the extracted IP address is a private IP address, selecting content in one of high definition (HD) and standard definition (SD) formats, and transmitting the selected content in the format.

### BRIEF DESCRIPTION OF THE DRAWINGS

The above and other objects, features and advantages of the present invention will be more clearly understood from the following detailed description taken in conjunction with the accompanying drawings, in which:
FIG. 1 is a diagram illustrating the configuration of a conventional content provision system in which both a mobile communication network and an Internet communication network have been connected to a content server;
FIG. 2 is a diagram illustrating the configuration of a content provision system in which both a mobile communication network and an Internet communication network have been connected to a content server according to an embodiment of the present invention;
FIG. 3 is a flowchart illustrating a method of providing content according to an embodiment of the present invention; and
FIG. 4 is a diagram illustrating the configuration of an apparatus for providing content according to an embodiment of the present invention.

### DESCRIPTION OF THE PREFERRED EMBODIMENTS

The present invention may be modified in various ways, and may be implemented to have several embodiments. Specific embodiments are illustrated in the drawings and described in detail in the following description. It is however to be understood that the present invention is not intended to be limited to the specific embodiments of the present invention but the specific embodiments include all modifications, equivalents and substitutions that fall within the spirit and technical scope of the present invention.

The same reference numbers are used throughout the drawings to refer to the same or like parts. In the following description of the present invention, detailed descriptions of the known functions and configurations will be omitted if it is deemed that they may make the gist of the present invention unnecessarily obscure.

Terms, such as the terms "first" and "second," may be used to describe various elements, but the elements should not be limited by the terms. The terms are used to only distinguish between elements.

For example, a first element may be named a second element without departing from the scope of the present invention. Likewise, a second element may be named a first element.

The term "and/or" includes a combination of a plurality of related and described items, or any one of a plurality of related and described items.

When it is said that one element is "connected" or "coupled" with the other element, it should be understood that one element may be directly connected or coupled with the other element, but a third element may exist between the two elements.

In contrast, when it is said that one element is "directly connected" or "directly coupled" with the other element, it should be understood that a third element does not exist between the two elements.

The terms used in this application are used to only describe specific embodiments, and are not intended to limit the present invention.

A singular expression includes a plural expression unless clearly defined otherwise in the context. In this application, it should be understood that the terms "include," "comprise" and "have" are intended to designate that characteristics, numbers, steps, operations, elements, or parts described in the specification or a combination thereof are present, but are not intended to exclude the presence or possible addition of one or more other characteristics, numbers, steps, operations, elements, parts, or combinations thereof advance.

All terms used herein, including technical or scientific terms, have the same meanings as those typically understood by those skilled in the art unless otherwise defined.

Terms, such as ones defined in common dictionaries, should be construed as having the same meanings as those in the context of related technology, and should not be construed as having ideal or excessively formal meanings unless clearly defined in the present invention.

Embodiments of the present invention are described in more detail with reference to the accompanying drawings. In the description of the present invention, the same reference numerals are used to denote the same elements throughout the drawings, and redundant descriptions of the same elements are omitted.

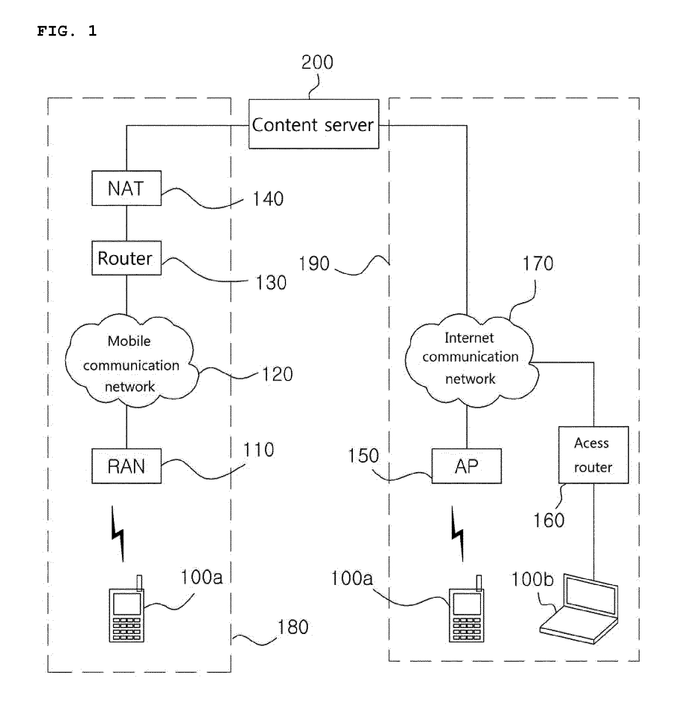

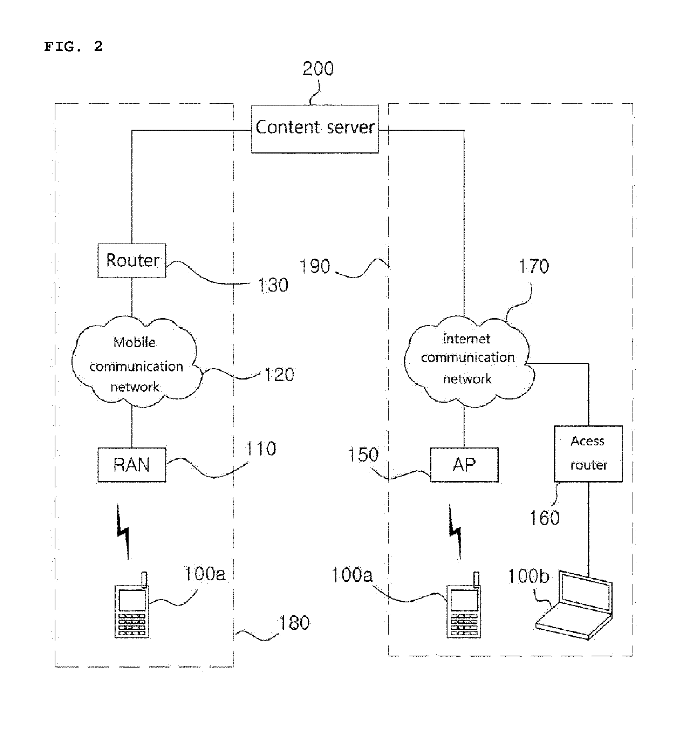

First, the comparison between the configuration of a content provision system including a content server according to an embodiment of the present invention and the configuration of a conventional content provision system including a content server is described with reference to FIGS. 1 and 2.

FIG. 1 is a diagram illustrating the configuration of a conventional content provision system in which both a mobile communication network and an Internet communication network have been connected to a content server, and FIG. 2 is a diagram illustrating the configuration of a content provision system in which both a mobile communication network and an Internet communication network have been connected to a content server according to an embodiment of the present invention.

First, the configuration of a conventional content provision system in which both a mobile communication network 120 and an Internet communication network 170 have been connected to a content server 200 is described below with reference to FIG. 1. The content server 200 may be accessed over the Internet communication network 170 via a wireless or wired connection, and content may be received from the content server 200.

As illustrated in FIG. 1, in the configuration of the conventional content provision system, a mobile communication network system 180 includes a client, a remote area network (RAN) 110, the mobile communication network 120, a router 130, and a network address translation (NAT) 140. The mobile communication network system 180 is connected to the content server 200.

The client of the mobile communication network system 180 may be a handheld terminal 100a that may be connected to the mobile communication network 120, such as a mobile phone, a smart phone, or a touch pad, but is not limited thereto.

In the conventional content provision system, in order to receive content through the mobile communication network system 180, the client accesses the RAN 110 including a base station, and then accesses the content server 200 via the mobile communication network 120, the router 130 and the NAT 140.

The mobile communication network 120 may be classified into second generation (2G), third generation (3G) and fourth generation (4G) networks based on the level of development thereof or technology applied thereto, and may be classified into Global System for Mobile Communications (GSM), Code Division Multiple Access (CDMA) and Long Term Evolution (LTE) networks based on the technical scheme. In the following description, however, the mobile communication network 120 includes all mobile communication networks regardless of the above classification.

The router 130 is a device that, when different networks are connected and then information is exchanged, reads the address of a recipient included in transmitted information (i.e., a packet) and sends the information to another communication network along the most appropriate communication path.

The NAT 140 is a device that converts private IP addresses into public IP addresses.

The NAT 140 may be implemented to be included in the router 130. The NAT 140 is widely used in a public network, which includes both the mobile communication network 120 and the Internet communication network 170 and is used by many people. In particular, if an NAT needs to be used by many people, a special NAT device called a large-scale NAT (LSNAT) may be used.

In an Internet communication network system 190, if a client 100a is connected to the Internet communication network 170 via a wireless connection, the client 100a is connected to the Internet communication network 170 through an access point (AP) 150.

In contrast, if a client 100b is connected to the Internet communication network 170 via a wired connection, the client 100b is connected to the Internet communication network 170 through an access router 160.

It will be apparent that the access router 160 may also be used to access the wireless Internet communication network 170 through the AP 150, but a detailed configuration thereof is omitted for convenience of description.

Furthermore, in FIGS. 1 and 2, in order to describe the elements of the mobile communication network 120 related to the present invention in detail, the RAN 110, the router 130 and the NAT 140 are separately illustrated. Although all the elements and the mobile communication network 120 illustrated in FIGS. 1 and 2 may be collectively called a mobile communication network, a system including all of the elements, such as the RAN 110, the router 130 and the NAT 140, and the mobile communication network is hereinafter called the mobile communication network system 180 for convenience of description.

In the conventional art, access to the content server 200 over the mobile communication network 120 is performed via the NAT 140 in the same manner as access to the content server 200 over the Internet communication network 170.

In an embodiment of the present invention, however, as illustrated in FIG. 2, there is no change in access to the content server 200 over the Internet communication network 170 as in the conventional art, but access to the content server 200 over the mobile communication network 120 is directly performed through the router 130 without the intervention of the NAT 140.

In the case of the content server 200 of FIG. 2, the reason why a reference numeral identical to that of FIG. 1 is used is that the content server 200 according to an embodiment of the present invention may use a content transmission function, that is, the original function of the conventional content server 200, and also determine a content transmission request over the mobile communication network 120.

That is, the content server 200 according to an embodiment of the present invention may determine the type of communication network and then provide content in accordance with the type of communication network only if the convent server 200 is set such that it also responds to a content transmission request from a private IP address even without changing the configuration of the conventional content server 200.

In an embodiment of the present invention, when the content server 200 is directly accessed through the router 130 over the mobile communication network 120 without the intervention of the NAT 140, an IP address recorded on the content server 200 becomes a private IP address, not a public IP address.

Unlike a public IP address, a private IP address is used only for personal purposes. The private IP address is defined as 10.x.x.x in the case of class A, as 172.16.x.x to 172.31.x.x in the case of class B, and as 192.168.0.x to 192.168.255.x in the case of class C.

In the case of conventional servers, particularly servers that are accessed by unspecified individuals, for example, the content server 200 of the present invention, they are set such that they do not respond to a content transmission request from a private IP address.

In an embodiment of the present invention, the content server 200 is set such that it responds to a content transmission request from a private IP address. Furthermore, a content transmission request over the Internet communication network 170 is received using a public IP address as in the conventional art, and a content transmission request is received using a private IP address only when the mobile communication network 120 is used. Accordingly, the Internet communication network 170 and the mobile communication network 120 may be distinguished from each other using only IP addresses.

If the content server 200 is set such that it responds to a content transmission request from a private IP address, the content server 200 may be vulnerable to access thereto for illegal purposes because the clients of unspecified individuals may access the content server 200.

In order to resolve such vulnerability, information about private IP addresses distinguished based on mobile communication network service providers may be previously stored, and, when a content transmission request is received using the private IP address, the content server 200 may respond to the received content transmission request only if, as a result of the comparison with the information about the private IP addresses distinguished based on the mobile communication network service providers, corresponding information is present.

Furthermore, if information about a mobile communication network service provider corresponding to a private IP address has been determined, the characteristics of a mobile communication network managed by the mobile communication network service provider may also be determined, with the result that it is possible to provide differentiated content using the characteristics of the mobile communication network.

For example, if private IP addresses used by a mobile communication network service provider A using a 3G network are previously defined as 172.16.x.x to 172.17.x.x and private IP addresses used by a mobile communication network service provider B using a 4G network are previously defined as 172.18.x.x to 172.19.x.x, the mobile communication network service providers may be distinguished based on a private IP address through which the transmission of content has been requested. In addition, the type of communication network or other pieces of information may be obtained.

That is, in the content provision system according to an embodiment of the present invention, if the type of communication network may be determined, that is, if whether a communication network is the mobile communication network 120 or the Internet communication network 170 may be determined, this may be used in various fields.

For example, first, an appropriate transmission technology or acceleration algorithm for transmitting content more rapidly may be used based on the type of communication network.

Furthermore, in the case of the same content, content in different formats may be transmitted based on the type of communication network.

For example, in a transfer control protocol (TCP) widely used in the Internet in order to increase the transfer rate of content, an acceleration algorithm for more rapid data transfer includes a delay-based TCP congestion control algorithm and a loss-based TCP congestion control algorithm.

In general, in the case of a mobile communication network, technology using a loss-based TCP congestion control algorithm, such as BIC and CUBIC, is overshot upon transmitting data. Accordingly, a high packet loss occurs, and thus deteriorates TCP performance.

Accordingly, in the case of a mobile communication network, it is more efficient to use a delay-based TCP congestion control algorithm, such as Vegas.

Furthermore, the transfer rate of content may be increased using various parameters, such as a windows size and a slow start method that determine TCP performance and the detection of retransmission.

For example, faster acceleration performance may be provided by more conservatively performing the slow start method in a mobile communication network than in an Internet communication network.

Furthermore, video data may be provided in a different format according to different coding based on a terminal on which the video data is displayed.

For example, in scalable video coding according to H.264, pieces of content in a high definition (HD) format, a standard definition (SD) format, and a quarter video graphic array (QVGA) format may be simultaneously generated.

In general, QVGA has a pixel configuration of 320 x 240, which corresponds to 1/4 of the resolution of VGA (640×80). QVGA is widely used in a handheld terminal having a small screen like a mobile phone in order to provide optimum resolution. A resolution of 720 x 480 is classified as an SD level, and a resolution of 1,280 × 720 or 1,920 × 1,080 is classified as an HD level.

That is, pieces of content in the HD, SD and QVGA formats may be simultaneously generated by performing scalable video coding on the original content within a content server or using an encoding device connected to the content server, and content in an appropriate format may be transmitted based on the type of communication network.

For example, a content transmission request over a mobile communication network is commonly a content transmission request using a handheld terminal. In such a case, content in a QVGA format may be transmitted. In the case of a content transmission request over an Internet communication network, content in the HD or SD format may be transmitted.

That is, in accordance with the content provision system according to an embodiment of the present invention, content may be provided more rapidly because the type of communication network may be determined. Furthermore, content in a format suitable for the type of communication network may be provided.

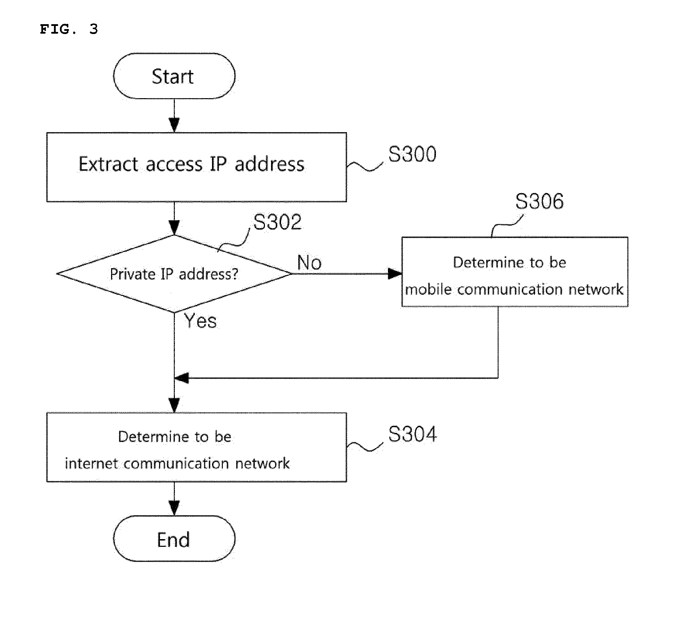

A method of providing content according to an embodiment of the present invention is described below with reference to FIG. 3.

FIG. 3 is a flowchart illustrating a method of providing content according to an embodiment of the present invention.

As illustrated in FIG. 3, in the method of providing content according to this embodiment of the present invention, first, an IP address included in a content transmission request is extracted at step 300. Whether the extracted IP address is a public IP address or a private IP address is determined at step 302.

If it is determined that the extracted IP address is a public IP address, the content transmission request is determined to be a content transmission request over an Internet communication network at step 306.

In contrast, if it is determined that the extracted IP address is a private IP address, the content transmission request is determined to be a content transmission request over a mobile communication network at step 304.

If a content transmission request is received from a private IP address, the extracted private IP address may be compared with previously stored private IP addresses. Only if, as a result of the comparison, the extracted private IP address is identical to a previously stored private IP address, content may be transmitted in response to the content transmission request.

Furthermore, information about a mobile communication network service provider corresponding to the private IP address may be further extracted, and the extracted information may be used to transmit content.

Once the type of communication network has been determined, an appropriate TCP acceleration algorithm may be selected based on the type of communication network as described above, and content may be transmitted to a device that has made a content transmission request using the selected TCP acceleration algorithm.

Furthermore, an appropriate data format may be selected based on the type of communication network, and content in the selected data format may be transmitted to a device that has made a content transmission request.

For this purpose, as described above, an element, such as the router 130 of a mobile communication network, needs to be set such that it directly transmits a content transmission request to the content server 200 without the intervention of the NAT 140.

Furthermore, as described above, the content server 200 also needs to be set such that it responds to a content transmission request from a private IP address.

It will be apparent that a method of providing content according to an embodiment of the present invention may be implemented in the form of a program.

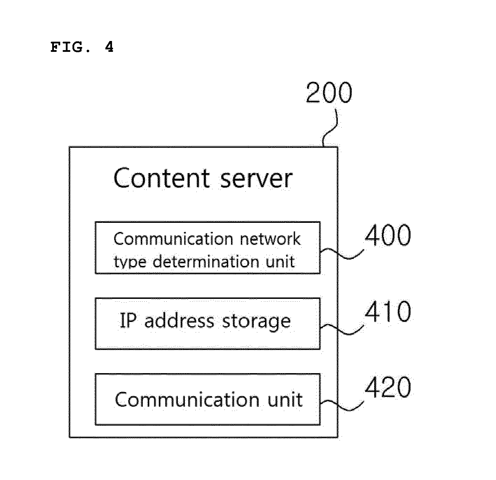

The configuration of an apparatus for providing content according to an embodiment of the present invention is described below with reference to FIG. 4.

FIG. 4 is a diagram illustrating the configuration of the apparatus for providing content according to this embodiment of the present invention.

As illustrated in FIG. 4, the apparatus for providing content 200 according to an embodiment of the present invention includes a communication network type determination unit 400, an IP address storage unit 410, and a communication unit 420.

The communication network type determination unit 400 extracts the IP address of a device that has sent a content transmission request, and determines whether or not the extracted IP address is a private IP address. If it is determined that the extracted IP address is a private IP address, the communication network type determination unit 400 determines the content transmission request to be a content transmission request over a mobile communication network. If it is determined that the extracted IP address is a public IP address, the communication network type determination unit 400 determines the content transmission request to be a content transmission request over an Internet communication network.

The IP address storage unit 410 stores information about private IP addresses whose content transmission requests need to be responded to.

As described above, the content server 200 according to this embodiment of the present invention, that is, the apparatus for providing content, is set such that it also responds to a content transmission request from a private IP address.

However, if the apparatus for providing content is set such that it also responds to a content transmission request from a private IP address, a content server may be vulnerable to access thereto for illegal purposes because the clients of unspecified individuals may access the content server.

In order to prevent such vulnerability, information about private IP addresses distinguished based on mobile communication network service providers may be previously stored. In this case, if a content transmission request using a specific private IP address is received, the specific private IP address may be compared with the private IP addresses distinguished based on the mobile communication network service providers. Only if, as a result of the comparison, corresponding information is present, the apparatus for providing content may respond to the received content transmission request.

The IP address storage unit 410 may store information about private IP addresses whose content transmission requests need to be responded to, as described above.

Once information about a mobile communication network service provider corresponding to a private IP address has been determined, the characteristics of a mobile communication network managed by the mobile communication network service provider may also be determined, with the result that differentiated content can be provided using the characteristics of a mobile communication network. Accordingly, the IP address storage unit 410 may further store information about communication network service providers corresponding to private IP addresses in addition to information about private IP addresses whose content transmission requests need to be responded to.

The communication unit 420 is connected to other elements that form a communication network, and is configured to receive a content transmission request and respond to the content transmission request so that content is transmitted.

The communication unit 420 of the apparatus for providing content according to this embodiment of the present invention is set such that it responds to a content transmission request from a private IP address, as described above.

Furthermore, as described above, a content transmission request from a private IP address is directly received by the content server over the mobile communication network 120 without the intervention of the NAT 140.

The content provision apparatus 200 according to this embodiment of the present invention may determine the type of communication network only if a conventional content server is set such that it also responds to a content transmission request from a private IP address.

Furthermore, it will be apparent that the content provision method according to this embodiment of the present invention may be implemented in the form of a program and implemented in the form of a digital processing device, such as a server in which the program has been installed.

As described above, the method and apparatus for providing content according to the embodiments of the present invention may have the advantage of distinguishing between a mobile communication network and an Internet communication network and also providing content over both networks while managing a single content server.

The method and apparatus for providing content according to the embodiments of the present invention may have the advantage of distinguishing between a mobile communication network and an Internet communication network, thereby more rapidly providing content and also providing content in different formats based on the type of communication network.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. A method of providing content, the method being performed by a content server connected to a mobile communication network and an Internet communication network and configured to provide content, comprising;
extracting an Internet protocol (IP) address included in a received content transmission request;
determining whether or not the extracted IP address is a private IP address;
determining the content transmission request to be a content transmission request over a mobile communication network if it is determined that the extracted IP address is a private IP address; and
transmitting requested content to the extracted IP address;
wherein the content server is set such that it also responds to a content transmission request from a private IP address, and the mobile communication network performs the content transmission request on the content server without the intervention of a network address translation (NAT) device.

2. The method of claim 1, wherein determining the content transmission request to be a content transmission request over a mobile communication network if it is determined that the extracted IP address is a private IP address may include determining the content transmission request to be a content transmission request over an Internet communication network if it is determined that the extracted IP address is a public IP address, not a private IP address.

3. The method of claim 1, wherein if it is determined that the extracted IP address is a private IP address, whether or not the IP address is included in previously stored IP address information may be determined, and the requested content may be transmitted to the extracted IP address if it is determined that the IP address is included in the previously stored IP address information.

4. The method of claim 3, wherein if it is determined that the extracted IP address is a private IP address, whether or not the IP address is included in previously stored IP address information may be determined, and a response to the received content transmission request may not be made if it is determined that the IP address is not included in the previously stored IP address information.

5. The method of claim 1, wherein transmitting the requested content to the extracted IP address may include, if it is determined that the extracted IP address is a private IP address, selecting data transfer acceleration technology to which a data transfer acceleration algorithm suitable for a mobile communication network has been applied, and transmitting the requested content using the selected data transfer acceleration technology.

6. The method of claim 5, wherein the data transfer acceleration algorithm suitable for the mobile communication network may be a delay-based transfer control protocol (TCP) congestion control algorithm.

7. The method of claim 1, wherein transmitting the requested content to the extracted IP address may include, if it is determined that the extracted IP address is a private IP address, selecting data transfer acceleration technology to which a data transfer acceleration algorithm suitable for an Internet communication network has been applied, and transmitting the requested content using the selected data transfer technology.

8. The method of claim 7, wherein the data transfer acceleration algorithm suitable for the Internet communication network may be a loss-based TCP congestion control algorithm.

9. The method of claim 1, wherein transmitting the requested content to the extracted IP address may include, if it is determined that the extracted IP address is a private IP address, selecting content in a quarter video graphic array (QVGA) format, and transmitting the selected content in the format.

10. The method of claim 1, wherein transmitting the requested content to the extracted IP address may include, if it is determined that the extracted IP address is a private IP address, selecting content in one of high definition (HD) and standard definition (SD) formats, and transmitting the selected content in the format.

11. An apparatus for providing content, the apparatus being connected to a mobile communication network and an Internet communication network and configured to provide content, comprising:
a communication network type determination unit configured to extract an IP address included in a received content transmission request, to determine whether or not the extracted IP address is a private IP address, and to determine the content transmission request to be a content transmission request over a mobile communication network if it is determined that the extracted IP address is a private IP address; and
a communication unit configured to transmit the content transmission request and requested content to the extracted IP address, and to also respond to a content transmission request from a private IP address;
wherein the mobile communication network performs the content transmission request on the content server without the intervention of an NAT device.

12. The apparatus of claim 11, wherein the communication network type determination unit may determine the content transmission request to be the content transmission request over an Internet communication network if it is determined that the extracted IP address is a public IP address, not a private IP address.

13. The apparatus of claim 11, wherein the content provision apparatus may further include an IP address storage unit configured to store IP addresses, the communication network type determination unit may determine whether or not the extracted IP address is included in IP address information stored in the IP address storage unit if it is determined that the extracted IP address is a private IP address, and the communication unit may transmit the requested content to the extracted IP address if it is determined that the IP address is included in previously stored IP address information.

14. The apparatus of claim 13, wherein the communication unit may not make a response to the received content transmission request if, as a result of the determination of the communication network type determination unit, it is determined that the extracted IP address is not included in the previously stored IP address information.

15. The apparatus of claim 11, wherein the transmission of the requested content to the extracted IP address that is performed by the communication unit may include, if it is determined that the extracted IP address is a private IP address, the selection of data transfer acceleration technology to which a data transfer acceleration algorithm suitable for a mobile communication network has been applied, and the transmission of the requested content using the selected data transfer acceleration technology.

16. The apparatus of claim 15, wherein the data transfer acceleration algorithm suitable for the mobile communication network may be a delay-based transfer control protocol (TCP) congestion control algorithm.

17. The apparatus of claim 11, wherein the transmission of the requested content to the extracted IP address that is performed by the communication unit may include, if it is determined that the extracted IP address is a private IP address, the selection of data transfer acceleration technology to which a data transfer acceleration algorithm suitable for an Internet communication network has been applied, and the transmission of the requested content using the selected data transfer technology.

18. The apparatus of claim 17, wherein the data transfer acceleration algorithm suitable for the Internet communication network may be a loss-based TCP congestion control algorithm.

19. The apparatus of claim 11, wherein the transmission of the requested content to the extracted IP address that is performed by the communication unit may include, if it is determined that the extracted IP address is a private IP address, the selection of content in a QVGA format, and the transmission of the selected content in the format.

20. The apparatus of claim 11, wherein the transmission of the requested content to the extracted IP address that is performed by the communication unit may include, if it is determined that the extracted IP address is a private IP address, the selection of content in one of HD and SD formats, and the transmission of the selected content in the format.

21. A recording medium having a program for implementing a method of providing content recorded on, the method being performed by a content server connected to a mobile communication network and an Internet communication network and configured to provide content, the method including:
extracting an Internet protocol (IP) address included in a received content transmission request;
determining whether or not the extracted IP address is a private IP address;
determining the content transmission request to be a content transmission request over a mobile communication network if it is determined that the extracted IP address is a private IP address; and
transmitting requested content to the extracted IP address;
wherein the content server is set such that it also responds to a content transmission request from a private IP address, and the mobile communication network performs the content transmission request on the content server without the intervention of a network address translation (NAT) device.
